# EUROPÄISCHE PATENTSCHRIFT

(11) **EP 1 074 164 B1**
(45) Veröffentlichungstag und Bekanntmachung des Hinweises auf die Patenterteilung: **30.05.2007**
(21) Anmeldenummer: 99922061.9
(22) Anmeldetag: 22.03.1999
(51) Int. Cl.: H04Q 7/38, H04B 7/26

(54) **VERFAHREN ZUR NACHRICHTENÜBERTRAGUNG IN EINEM FUNKKOMMUNIKATIONSSYSTEM**
METHOD FOR TRANSMITTING INFORMATION IN A RADIOCOMMUNICATIONS SYSTEM
PROCEDE POUR LE TRANSFERT D'INFORMATIONS DANS UN SYSTEME DE RADIOCOMMUNICATIONS

(30) Priorität: 21.04.1998 DE 19817771
(43) Veröffentlichungstag der Anmeldung: 07.02.2001
(73) Patentinhaber: SIEMENS AKTIENGESELLSCHAFT, 80333 München (DE)
(72) Erfinder: SCHINDLER, Jürgen, D-10555 Berlin (DE); TRAYNARD, Jean-Michel, D-81667 München (DE)
(86) Internationale Anmeldenummer: PCT/DE1999/000841
(87) Internationale Veröffentlichungsnummer: WO 1999/055108

(56) Entgegenhaltungen:
- EP-A- 0 633 671
- GUO Q ET AL: "AGGRESSIVE PACKET RESERVATION MULTIPLE ACCESS USING SIGNATURES" IEEE INTERNATIONAL SYMPOSIUM ON PERSONAL, INDOOR AND MOBILE RADIO COMMUNICATIONS, Bd. 4, 18. September 1994 (1994-09-18), Seiten 1247-1253, XP002027584
- TAKAHIRO SUZUKI ET AL: "A CONTENTION-BASED RESERVATION PROTOCOL USING A TDD CHANNEL FOR WIRELESS LOCAL AREA NETWORKS: A PERFORMANCE ANALYSIS" PROCEEDINGS OF THE INTERNATIONAL CONFERENCE ON COMMUNICATIONS (ICC), GENEVA, MAY 23 - 26, 1993, Bd. 2, 23. Mai 1993 (1993-05-23), Seiten 1010-1016, XP000371230 INSTITUTE OF ELECTRICAL AND ELECTRONICS ENGINEERSISBN: 0-7803-0950-2

## Beschreibung

Die Erfindung betrifft ein Verfahren zur Nachrichtenübertragung in einem Funk-Kommunikationssystem, insbesondere in einem Mobilfunksystem mit TDD-Teilnehmerseparierung.

In Funk-Kommunikationssystemen werden Informationen (beispielsweise Sprache, Bildinformationen oder andere Daten) mit Hilfe von elektromagnetischen Wellen über eine Funkschnittstelle zwischen sendender und empfangender Funkstation (Basisstation bzw. Mobilstation) übertragen. Das Abstrahlen der elektromagnetischen Wellen erfolgt dabei mit Trägerfrequenzen, die in dem für das jeweilige System vorgesehenen Frequenzband liegen. Für zukünftige Mobilfunksysteme mit CDMA- oder TD/CDMA-Übertragungsverfahren über die Funkschnittstelle, beispielsweise das UMTS (Universal Mobile Telecommunication System) oder andere Systeme der 3. Generation sind Frequenzen im Frequenzband von ca. 2000 MHz vorgesehen.

Zur Teilnehmerseparierung wird z.B. beim GSM-Mobilfunksystem ein Zeitlagenmultiplex-Verfahren(TDMA) zur Unterscheidung der Signalquellen verwendet. In einem Zeitschlitz wird ein Funkblock übertragen, der empfangsseitig getrennt von anderen Funkblöcken auswertbar ist. Aus dem GSM-Mobilfunksystem ist es ferner bekannt, zur Ressourcenzuteilung einen Zugriffsblock in Aufwärtsrichtung zu senden. Damit signalisiert eine Mobilstation dem Netz, daß es einen Verbindungsaufbau wünscht. Der Zugriff auf den Zeitschlitz, der für die Zugriffsblöcke reserviert ist, erfolgt jedoch willkürlich. Falls mehrere Mobilstationen gleichzeitig in diesem Zeitschlitz senden, überlagern sich die Zugriffsblöcke und sind somit bei der empfangenden Basisstation nicht detektierbar. Nach einer Kollision versuchen die Mobilstationen erneut, einen Zugriffsblock zu senden. Je häufiger der Zugriff wiederholt werden muß, um so länger ist die Wartezeit und um so mehr sinkt die Effektivität dieses Zugriffsverfahrens.

Die EP 0 633 671 A2 offenbart ein Verfahren zur Nachrichtenübertragung, bei dem der physikalische Kanal gemäss einer TDMA-Teilnechmerseparierung Zeitschlitze vorsieht, und in jedem Zeitschlitz mehrere Funkblöcke in Form von Minizeitschlitzen übertragen werden.

Eine besondere Ausprägung des Zeitlagenmultiplex (TDMA) ist ein TDD (time division duplex) Übertragungsverfahren, bei dem in einem gemeinsamen Frequenzkanal die Übertragung sowohl in Aufwärtsrichtung, d.h. von der Mobilstation zur Basisstation, als auch in Abwärtsrichtung, d.h. von der Basisstation zur Mobilstation, erfolgt. Die minimal zu vergebende Ressourceneinheit ist durch die Zahl der in einem Zeitschlitz übertragbaren Bits angegeben.

Eine kleine minimale Ressourceneinheit ist wünschenswert, da für unterschiedliche Anwendungsfälle, z.B. die Zugriffsblöcke, eine feinere Granularität bei den verbrauchten Ressourcen die Kapazitätsausnutzung verbessert. Dies war bisher nur durch Verkürzung der Zeitschlitzdauer möglich. Der Anteil der Nutzdatenrate an der Gesamtdatenrate sinkt bei Erhöhung der Zahl der Zeitschlitze pro Zeiteinheit, da üblicherweise pro Zeitschlitz eine Trainingssequenz zu Kanalschätzungszwecken gesendet wird und die Trainigssequenz eine Mindestlänge hat.

Der Erfindung liegt die Aufgabe zugrunde, die minimale Ressourceneinheit zu verkleinern, ohne den Overhead (Verhältnis der nicht datentragenden Signalanteile zu den datentragenden Signalanteilen) des Gesamtsystems merklich zu erhöhen. Diese Aufgabe wird durch das Verfahren mit den Merkmalen des Anspruchs 1 und die Basisstation mit den Merkmalen des Anspruchs 8 gelöst. Vorteilhafte Weiterbildungen sind den Unteransprüchen zu entnehmen.

Erfindungsgemäß werden zwischen einer Basisstation und Mobilstationen über einen physikalischen Kanal Nachrichten übertragen, wobei der physikalische Kanal Zeitschlitze vorsieht.

In einem Zeitschlitz werden mehrere Funkblöcke übertragen, die einen Datenanteil und einen Schutzzeitanteil haben. Die Datenanteile der Funkblöcke dieses Zeitschlitzes sind zueinander zeitlich orthogonal. Dadurch sind die Funkblöcke getrennt auswertbar. Die Zeitschlitzstruktur des Funk-Kommunikationssystems wird nicht verändert, so daß sich der Overhead kaum erhöht, da nur in dem ausgewählten Zeitschlitz eine Unterteilung in mehrere Funkblöcke erfolgt. Ein Zeitschlitz wird in n>1 virtuelle Zeitschlitze unterteilt.

Besonders vorteilhaft kann dies für die Aufwärtsrichtung von unterschiedlichen Mobilstationen zur Basisstation erfolgen. Beispielsweise für Funkblöcke zum Anfordern einer Ressourcenzuteilung (Zugriffsblöcke) ist die feinere Granularität von Vorteil, da die Wahrscheinlichkeit der Kollisionen verringert wird und trotzdem die wenigen benötigten Informationen übertragen werden können. Um den Implementierungsaufwand zu verringern wird zur Ressourcenzuteilung ein ALOHA-Protokoll benutzt. Es können auch aufwendigere Protokolle, wie CSMA/CA zum Einsatz kommen.

Nach einer weiteren vorteilhaften Ausprägung der Erfindung werden auch in benachbarten Zellen in einem Zeitschlitz - bei einer Synchronisation in beiden Zellen zeitgleich - Funkblöcke benutzt, deren Datenanteile zueinander zeitlich orthogonal sind, oder es werden für den gleichen Zweck, z.B. zur Ressourcenanforderung, unterschiedliche Zeitschlitze benutzt. Damit werden für das Zugriffsverfahren Gruppen (Cluster) gebildet, die eine feine Granularität mit einer geringen Kollisionswahrscheinlichkeit verbinden.

Weitere vorteilhafte Ausgestaltungen der Erfindung sehen vor, daß der Datenanteil aus einer Trainingssequenz und zumindest einem Nutzdatenteil besteht und/oder der physikalische Kanal durch ein Frequenzband, einen Spreizkode und einen Zeitschlitz gebildet wird. Somit läßt sich das erfindungsgemäße Verfahren in ein digitales Mobilfunksystem der 3. Generation integrieren. Bei einem solchen Mobilfunksystem kommt vorteilhafterweise ein TDD-Teilnehmerseparierungsverfahren zum Einsatz, so daß auch asymmetrische Datendienste ohne Ressourcenverschwendung unterstützt werden.

Im folgenden wird die Erfindung anhand eines Ausführungsbeispiels bezugnehmend auf zeichnerische Darstellungen näher erläutert.

Dabei zeigen
- FIG 1: ein Blockschaltbild eines Mobilfunksystems,
- FIG 2: eine schematische Darstellung der Rahmenstruktur des TDD-Übertragungsverfahrens,
- FIG 3: eine schematische Darstellung von unterschiedlichen Zugriffsblöcken,
- FIG 4: eine Einteilung des Mobilfunksystems in Gruppen von Zellen mit einer zeitlich orthogonalen Signalisierung,
- FIG 5: ein vereinfachtes Blockschaltbild einer Basisstation.

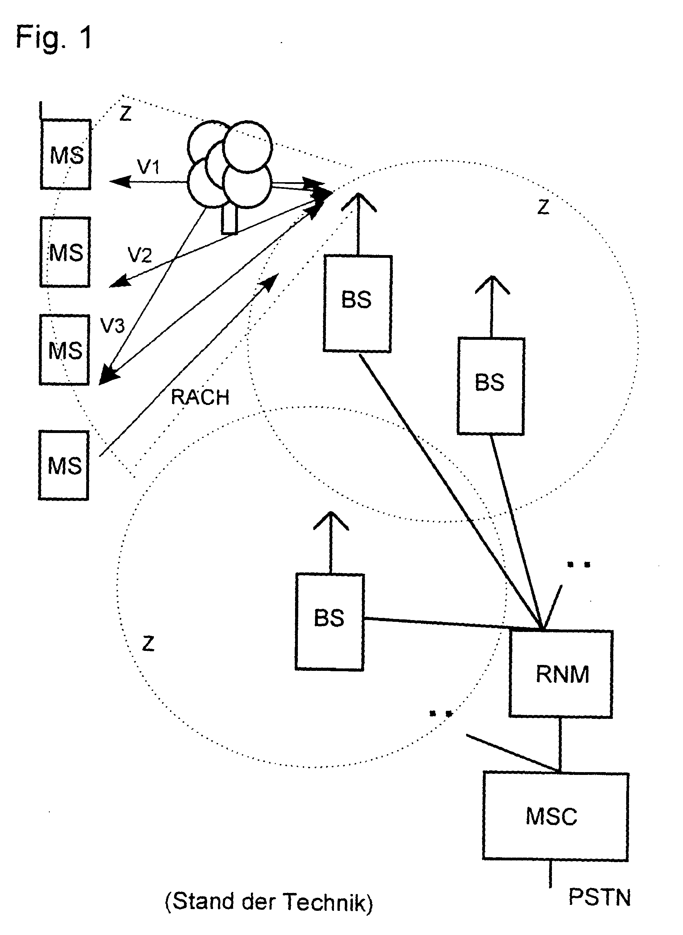

Das in FIG 1 dargestellte Mobilfunksystem als Beispiel eines Funk-Kommunikationssystem besteht aus einer Vielzahl von Mobilvermittlungsstellen MSC, die untereinander vernetzt sind bzw. den Zugang zu einem Festnetz PSTN herstellen. Weiterhin sind diese Mobilvermittlungsstellen MSC mit jeweils zumindest einer Einrichtung RNM zum Zuteilen von funktechnischen Ressourcen verbunden. Jede dieser Einrichtungen RNM ermöglicht wiederum eine Verbindung zu zumindest einer Basisstation BS. Eine solche Basisstation BS kann über eine Funkschnittstelle eine Verbindung zu weiteren Funkstationen, z.B. Mobilstationen MS oder anderweitigen mobilen und stationären Endgeräten, aufbauen. Durch jede Basisstation BS wird zumindest eine Funkzelle Z gebildet. Bei einer Sektorisierung oder bei hierarchischen Zellstrukturen werden pro Basisstation BS auch mehrere Funkzellen Z versorgt.

In FIG 1 sind beispielhaft Verbindungen V1, V2, V3 zur Übertragung von Nutzinformationen und Signalisierungsinformationen zwischen Mobilstationen MS und einer Basisstation BS und eine Anforderung zur Ressourcenzuteilung in einem Zugriffskanal RACH durch eine weitere Mobilstation MS dargestellt.

Ein Operations- und Wartungszentrum OMC realisiert Kontroll- und Wartungsfunktionen für das Mobilfunksystem bzw. für Teile davon. Die Funktionalität dieser Struktur ist auf andere Funk-Kommunikationssysteme übertragbar, in denen die Erfindung zum Einsatz kommen kann, insbesondere für Teilnehmerzugangsnetze mit drahtlosem Teilnehmeranschluß.

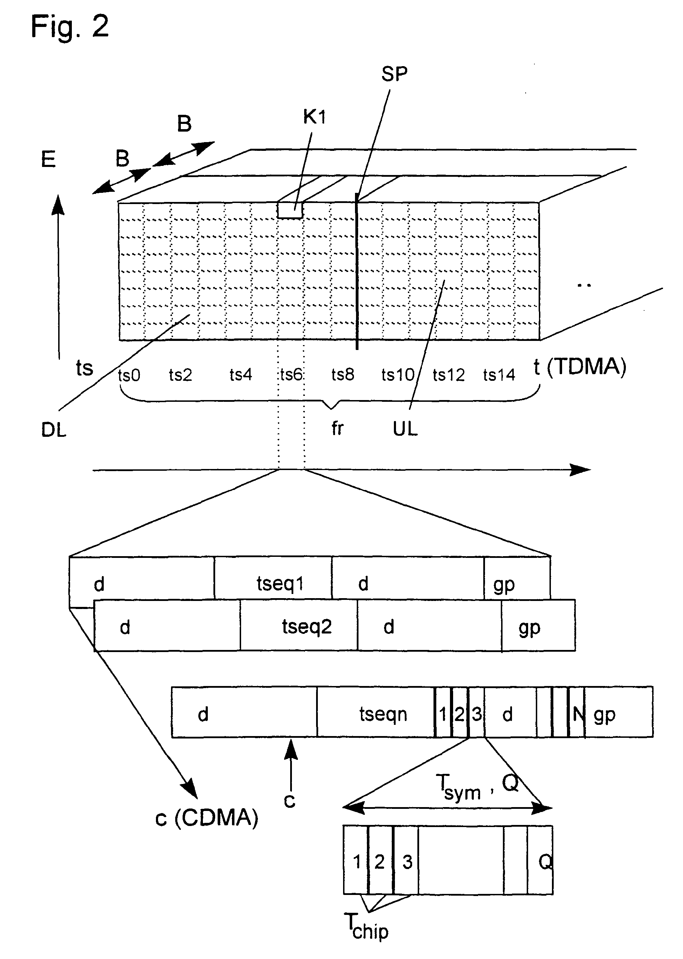

Die Rahmenstruktur der Funkübertragung ist aus FIG 2 ersichtlich. Gemäß einer TDMA-Komponente ist eine Aufteilung eines breitbandigen Frequenzbereichs, beispielsweise der Bandbreite B = 5 MHz in mehrere Zeitschlitze ts gleicher Zeitdauer, beispielsweise 16 Zeitschlitze ts0 bis ts15 vorgesehen. Ein Frequenzband erstreckt sich über einen Frequenzbereich B. Ein Teil der Zeitschlitze ts0 bis ts8 werden in Abwärtsrichtung DL und ein Teil der Zeitschlitze ts9 bis ts15 werden in Aufwärtsrichtung UL benutzt. Dazwischen liegt ein Umschaltpunkt SP. Bei diesem TDD-Übertragungsverfahren entspricht das Frequenzband für die Aufwärtsrichtung UL dem Frequenzband für die Abwärtsrichtung DL. Gleiches wiederholt sich für weitere Trägerfrequenzen.

Innerhalb der Zeitschlitze, die zur Nutzdatenübertragung vorgesehen sind, werden Informationen mehrerer Verbindungen in Funkblöcken übertragen. Diese Funkblöcke zur Nutzdatenübertragung bestehen aus Abschnitten mit Daten d, in denen empfangsseitig bekannte Trainingssequenzen tseql bis tseqn eingebettet sind. Die Daten d sind verbindungsindividuell mit einer Feinstruktur, einem Teilnehmerkode c, gespreizt, so daß empfangsseitig beispielsweise n Verbindungen durch diese CDMA-Komponente separierbar sind. Ein physikalischer Kanal K1 wird dabei durch ein Frequenzband B, einen Zeitschlitz ts8 und einen Teilnehmerkode c gebildet.

Die Spreizung von einzelnen Symbolen der Daten d bewirkt, daß innerhalb der Symboldauer T_{sym} Q Chips der Dauer T_{chip} übertragen werden. Die Q Chips bilden dabei den verbindungsindividuellen Teilnehmerkode c. Weiterhin ist innerhalb des Zeitschlitzes ts eine Schutzzeit gp zur Kompensation unterschiedlicher Signallaufzeiten der Verbindungen vorgesehen.

Innerhalb eines breitbandigen Frequenzbereiches B werden die aufeinanderfolgenden Zeitschlitze ts nach einer Rahmenstruktur gegliedert. So werden 16 Zeitschlitze ts zu einem Rahmen fr zusammengefaßt.

Die verwendeten Parameter der Funkschnittstelle sind vorteilhafterweise:

| | |
|---|---|
| Chiprate: | 4096 Mcps |
| Rahmendauer: | 10 ms |
| Anzahl Zeitschlitze: | 16 |
| Dauer eines Zeitschlitzes: | 625 µs |
| Spreizfaktor: | 16 |
| Modulationsart: | QPSK |
| Bandbreite: | 5 MHz |
| Frequenzwiederholungswert: | 1 |

Diese Parameter ermöglichen eine bestmögliche Harmonisierung mit einem FDD-Modus (frequency division duplex) für die 3. Mobilfunkgeneration.

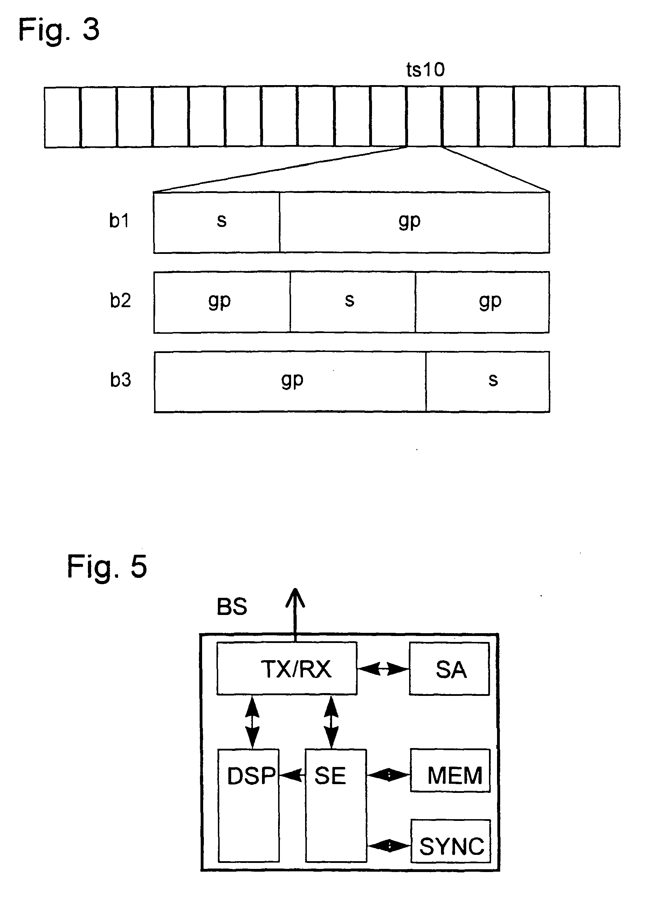

Bevor jedoch die Nachrichtenübertragung für Nutzdaten zwischen Mobilstation MS und Basisstation BS beginnen kann, wird die Verbindung aufgebaut. Dazu sendet die Mobilstation MS in einem Zugriffskanal RACH einen speziellen Funkblock b1, b2 oder b3 in Aufwärtsrichtung UL, der als Zugriffsblock ausgebildet ist und zumindest eine Kennung der Mobilstation MS enthält. Diese Kennung der Mobilstation MS, evtl. ergänzt durch weitere Angaben über die Basisstation BS, über zu signalisierende Informationen oder über physikalische Kanäle, ist nach FIG. 3 in einem Datenanteil s enthalten. Der Datenanteil s bildet zusammen mit einem Schutzzeitanteil gp den Zugriffsblock b1, b2, b3.

Entsprechend der Erfindung unterscheiden sich in einem physikalischen Kanal K1, K2 gesendete Zugriffsblöcke b1, b2, b3 durch die zeitliche Anordnung des Datenanteils s. Die Datenanteile s der unterschiedlichen Zugriffsblöcke b1, b2, b3 sind zueinander zeitlich orthogonal. Somit können nach FIG. 3 drei unterschiedliche Mobilstation MS im gleichen physikalischen Kanal K1, d.h. in einem Zeitschlitz ts10, einen Zugriffsblock b1, b2, b3 senden, ohne daß es zu Kollisionen bezüglich des Datenanteils s kommt. Alle drei Zugriffsblöcke b1, b2, b3 sind daher durch die Basisstation BS fehlerfrei auswertbar. Ohne Verzögerung kann den Mobilstationen MS jeweils ein oder mehrere Kanäle zur Nachrichtenübertragung zugewiesen werden. Dabei kommt ein ALOHA-Protokoll zum Einsatz.

Die Basisstation BS wertet die Zugriffsblöcke b1, b2, b3 aus und nimmt eine Ressourcenzuteilung an die Mobilstationen MS in Aufwärts- UL und/oder Abwärtsrichtung DL vor, abhängig vom aktuellen Auslastungszustand der funktechnischen Ressourcen der Funkschnittstelle und der Dringlichkeit des von der Mobilstation MS gewünschten Dienstes.

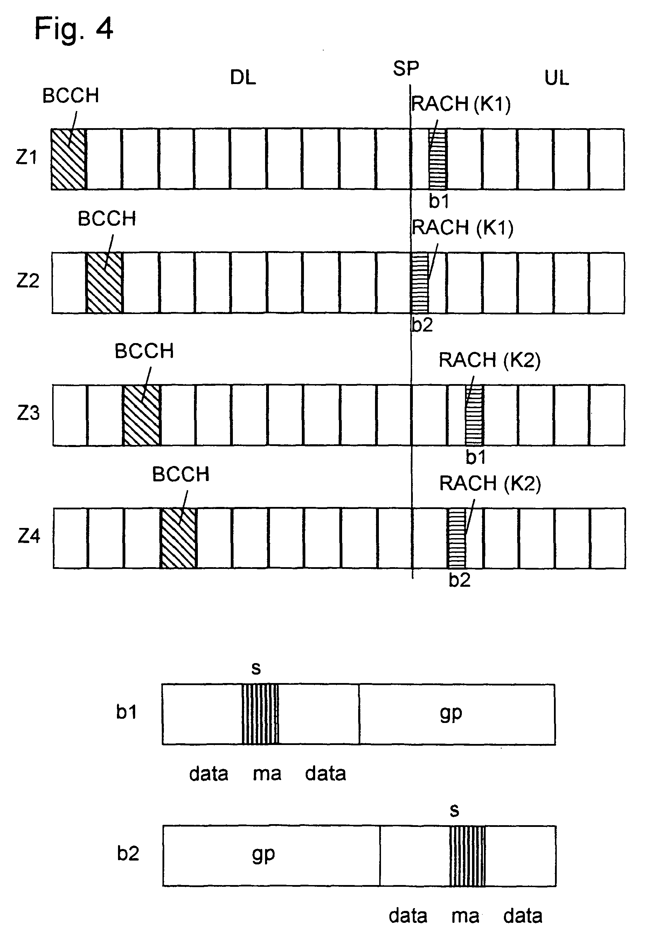

Durch den Aufbau der Zugriffsblöcke b1, b2, b3 kann innerhalb eines Mobilfunksystems, das aus Zellen besteht, eine Gruppierung entsprechend FIG. 4 vorgenommen werden. So wird beispielsweise in vier Zellen Z1 bis Z4, die ein Cluster bilden, ein Organisationskanal BCCH in unterschiedlichen Zeitschlitzen ausgestrahlt, wodurch die gegenseitigen Wechselwirkungen verringert werden.

Weiterhin werden in den vier Zellen Z1 bis Z4 für die Ressourcenanforderung zwei verschiedene Zeitschlitze genutzt.

Für die zwei Zellen, die den gleichen Zeitschlitz als Zugriffskanal RACH nutzen, wird jeweils ein unterschiedlicher Zugriffsblock b1, b2 eingesetzt, dessen Datenanteil s zum anderen zeitlich orthogonal ist. Damit ist das Mobilfunksystem auch bezüglich des Zugriffskanals RACH in Cluster eingeteilt.

Somit wird die Wahrscheinlichkeit von Kollisionen verringert, da in benachbarten Zellen entweder ein anderer Zeitschlitz und ein anderer Typ von Zugriffsblock b1, b2 benutzt wird. Die Ressourcenzuteilung wird beschleunigt, ohne daß der Overhead des Systems merklich vergrößert wird. Die kleinste Ressourceneinheit bezüglich der Ressourcenanforderung ist die Länge des Datenanteils s, die gegenüber einem Normalfunkblock verkürzt ist. Der Datenanteil besteht aus einer Mittambel ma, die zur Kanalschätzung auf der Empfängerseite der Funkschnittstelle dient, und zwei Nutzdatenteilen data mit der Bezeichnung der Mobilstation MS. Eine zusätzliche Spreizung der Nutzdatenteile data mit einem festen individuellen Spreizkode c erhöht die Unterscheidbarkeit auch wenn zwei Funkblöcke sich trotzdem überlagern sollten. Innerhalb eines Zeitschlitzes können acht Spreizkodes c mit festen Spreizfaktor parallel benutzt werden. Durch die Bildung von Zugriffsblock-Gruppen kann auf die Übertragung der Basisstationskennung im Zugriffsblock b1, b2 (sogenannter Color-Code) verzichtet werden.

Bei einer Zeitschlitzdauer von 625 µs könnte die Mittambel vorteilhafterweise etwa 130 µs, d.h. 533 chips, und die Dauer der zwei Nutzdatenteile data je 78 µs, d.h. je 299 chips, betragen. Bei einer QPSK-Modulation stehen damit 37 bit Information zur Verfügung. Der Schutzzeitanteil s ist demnach 339 µs, d.h. 1380 chips. Während der Schutzzeit werden keine Daten übertragen. Eine alternative Ausgestaltung sieht je 336 chips der Nutzdatenteile data vor und 512 chips für die Mittambel ma. Somit würden 2 x 21 Bit Informtionen übertragbar sein.

Die Auswertung der Zugriffsblöcke wird in einer Basisstation BS nach FIG. 5 durchgeführt. Diese besteht aus einer Sende/Empfangseinrichtung TX/RX, die Empfangssignale vom Frequenzbereich der Nachrichtenübertragung in das Basisband umsetzt, analog/digital wandelt, und die Empfangssignale verstärkt. Eine digitale Signalverarbeitung findet in einer Signalverarbeitungseinrichtung DSP statt. Es wird eine Kanalschätzung durchgeführt und die gesendeten Datensymbole werden detektiert.

Eine Signalauswerteeinrichtung SA extrahiert die Datenanteile s der Zugriffsblöcke b1, b2, b3 aufgrund der zeitlichen Orthogonalität und entnimmt die Anforderungen zur Ressourcenzuteilung. Die Ressourcenzuteilung selbst wird in der Einrichtung RNM zum Zuteilen von funktechnischen Ressourcen vorgenommen und zurück zur Basisstation BS signalisiert. Eine Steuereinrichtung SE weist den Mobilstationen MS daraufhin durch Zusammenstellen eines dementsprechenden Signalisierungsblocks und Senden dieses Blocks durch die Sende/Empfangseinrichtung TX/RX einen physikalischen Kanal zur Nachrichtenübertragung zu.

Auch das Zusammenwirken der Komponenten und die Einstellung des Sendezeitpunkts wird durch die Steuereinrichtung SE gesteuert. Zugehörige Daten über die konkreten Gegebenheiten der Verbindung werden in einer Speichereinrichtung MEM gespeichert.

## Patentansprüche

1. Verfahren zur Nachrichtenübertragung in einem Funk-Kommunikationssystem, bei dem
zwischen einer Basisstation (BS) und Mobilstationen (MS) über einen physikalischen Kanal (K1, K2) Nachrichten übertragen werden,
der physikalische Kanal (K1, K2) gemäß einer TDMA-Teilnehmerseparierung einen Zeitschlitz (ts0 bis ts15) vorsieht,
in dem Zeitschlitz (ts10) mehrere Funkblöcke (b1, b2, b3) übertragen werden,
wobei die Funkblöcke (b1, b2, b3) einen Datenanteil (s) und einen Schutzzeitanteil (gp) haben,
die Datenanteile (s) der Funkblöcke (b1, b2, b3) des Zeitschlitzes (ts10) zueinander zeitlich orthogonal sind,
der Datenanteil (s) aus einer Trainingssequenz (ma) und zumindest einem Nutzdatenteil (data) besteht,
der Nutzdatenteil (data) mit einem individuellen Spreizkode (c) des physikalischen Kanals gespreizt wird,
die Funkblöcke (b1, b2, b3) in Aufwärtsrichtung (UL) von unterschiedlichen Mobilstationen (MS) zur Basisstation (BS) gesendet werden,
die Funkblöcke (b1, b2, b3) in einem Zeitschlitz (ts10) zum Anfordern einer Ressourcenzuteilung gesendet werden,
und ein ALOHA-Protokoll zur Ressourcenzuteilung benutzt wird.

2. Verfahren nach Anspruch 1, bei dem
in benachbarten Zellen Funkblöcke (b1, b2, b3) im Zeitschlitz (ts10) benutzt werden, deren Datenanteile (s) zueinander zeitlich orthogonal sind.

3. Verfahren nach einem der vorherigen Ansprüche, bei dem der physikalische Kanal (K1, K2) durch ein Frequenzband (B), einen Spreizkode (c) und einen Zeitschlitz (ts10) gebildet wird.

4. Verfahren nach einem der vorherigen Ansprüche, bei dem die Nachrichtenübertragung mittels eines TDD-Teilnehmerseparierungsverfahrens erfolgt.

## Claims

1. Method for transmitting messages in a radio communication system,
wherein
messages are transmitted between a base station (BS) and mobile stations (MS) by way of a physical channel (K1, K2), the physical channel (K1, K2) provides a time slot (ts0 to ts15) according to a TDMA subscriber separation,
a number of radio blocks (b1, b2, b3) are transmitted in the time slot (ts10),
with the radio blocks (b1, b2, b3) having a data element (s) and a guard period element (gp),
the data element (s) of the radio blocks (b1, b2, b3) of the time slot (ts10) being temporally orthogonal to each other, the data element (s) comprising a training sequence (ma) and at least one payload element (data),
the payload element (data) being spread using an individual spread code (c) of the physical channel
the radio blocks (b1, b2, b3) being sent in the uplink (UL) from different mobile stations (MS) to the base station (BS), the radio blocks (b1, b2, b3) being sent in a time slot (ts10) to request resource allocation,
and an ALOHA protocol being used for resource allocation.

2. Method according to claim 1, wherein
radio blocks (b1, b2, b3) are used in adjacent cells in the time slot (ts10), the data elements (s) of said radio blocks (b1, b2, b3) being temporally orthogonal to each other.

3. Method according to one of the preceding claims, wherein the physical channel (K1, K2) is formed by a frequency band (B), a spread code (c) and a time slot (ts10).

4. Method according to one of the preceding claims, wherein message transmission takes place by means of a TDD subscriber separation method.

## Revendications

1. Procédé de transmission de messages dans un système de radiocommunications,
dans lequel des messages sont transmis entre une station de base (BS) et des stations mobiles (MS) sur un canal physique (K1, K2),
le canal physique (K1, K2) prévoit, selon une séparation des abonnés TDMA, un intervalle de temps (ts0 à ts15),
plusieurs blocs radio (b1, b2, b3) sont transmis dans l'intervalle de temps (ts10),
les blocs radio (b1, b2, b3) comprenant une composante de données (s) et une composante de temps de protection (gp),
les composantes de données (s) des blocs radio (b1, b2, b3) de l'intervalle de temps (ts10) sont orthogonales les unes aux autres dans le temps,
la composante de données (s) est formée d'une séquence d'apprentissage (ma) et d'au moins une composante de données utiles (data),
la composante de données utiles (data) est étalée avec un code d'étalement individuel (c) du canal physique,
les blocs radio (b1, b2, b3) sont envoyés dans le sens montant (UL) de différentes stations mobiles (MS) vers la station de base (BS),
les blocs radio (b1, b2, b3) dans un intervalle de temps (ts10) sont envoyés pour demander une allocation de ressources
et un protocole ALOHA est utilisé pour l'allocation de ressources.

2. Procédé selon la revendication 1, dans lequel, dans des cellules voisines, on utilise des blocs radio (b1, b2, b3) dans l'intervalle de temps (ts10) dont les composantes de données (s) sont orthogonales les unes aux autres dans le temps.

3. Procédé selon l'une des revendications précédentes, dans lequel le canal physique (K1, K2) est formé par une bande de fréquences (B), un code d'étalement (c) et un intervalle de temps (ts10).

4. Procédé selon l'une des revendications précédentes, dans lequel la transmission de messages se fait au moyen d'un procédé de séparation des abonnés TDD.
